# EUROPÄISCHE PATENTANMELDUNG

(11) **EP 0 874 235 A1**
(43) Veröffentlichungstag der Anmeldung: **28.10.1998**
(21) Anmeldenummer: 98101091.1
(22) Anmeldetag: 22.01.1998
(51) Int. Cl.: G01N 21/76, G01N 21/63, G01N 21/64

(54) **Vorrichtung zur Erfassung von diffus emittiertem Licht**

(30) Priorität: 24.01.1997 DE 19702557
(71) Anmelder: FRAUNHOFER-GESELLSCHAFT ZUR FÖRDERUNG DER ANGEWANDTEN FORSCHUNG E.V., 80636 München (DE)
(72) Erfinder: Hillerich, Bernd, Dr.-Ing., 89075 Ulm (DE); Wörmann, Wolfgang, Dipl.-Phys., 85302 Gerdsbach (DE)
(74) Vertreter: Schoppe, Fritz, Dipl.-Ing.

(57) **Zusammenfassung**

Bei einer Vorrichtung zur Erfassung von diffus emittiertem Licht, welches aufgrund einer chemischen Reaktion einer reagierenden Substanz oder durch Lichtanregung der reagierenden Substanz erzeugt wird, ist ein Substrat (102) vorgesehen, daß in einer seiner Oberflächen eine Vertiefung zur Aufnahme einer Kapillare (104) aufweist, in der die reagierende Substanz aufgenommen werden kann, wobei in der Vertiefung die Kapillare zumindest teilweise aufgenommen werden kann, wobei die Bewandung der Vertiefung das aus der Kapillare abgegebene Licht reflektiert. Ferner ist ein Photodetektor (108) vorgesehen, der auf dem Substrat (102) derart angeordnet werden kann, daß er die Vertiefung derart überdeckt, daß das von der Bewandung der Vertiefung reflektierte Licht auf den Photodetektor (108) trifft.

## Beschreibung

Die Vorliegende Erfindung bezieht sich auf eine Vorrichtung zur Erfassung von diffus emittiertem Licht, insbesondere bezieht sie sich auf eine Vorrichtung zur sehr effizienten Erfassung von diffus emittiertem Lumineszenzlicht (Chemilumineszenz) und von Fluoreszenzlicht, welches z. B. durch Anregung mittels Laserstrahlung entsteht und aus einer Kapillare, in der sich eine reagierende Substanz befindet, emittiert wird.

Die Chemilumineszenz ist ein neues und sehr empfindliches Nachweisverfahren in der Analytik, beispielsweise in der Biochemie, im Umweltschutz, bei der medizinischen Diagnostik sowie bei der industriellen Prozeßkontrolle. Ein weiteres Einsatzgebiet sind die sogenannten ELISA-Geräte (ELISA = Enzyme linked immunosorbent assay). Die laserinduzierte Fluoreszenz ist bei weitem das empfindlichste Nachweisverfahren für Substanzen, die beispielsweise durch die Elektrophorese in einer Kapillare separiert worden sind.

Das durch eine chemische Reaktion (Chemilumineszenz) oder durch gezielte Lichtanregung (Fluoreszenz) z. B. aus einer Fused Silicia Kapillare erzeugte Lumineszenzlicht breitet sich im allgemeinen isotrop um die Kapillare in den gesamten Raum aus. Ein planarer Photodetektor in unmittelbarer Nähe der Kapillare wird so je nach Größe seines sensitiven Bereiches und seines Abstandes zur Kapillare immer nur den Bruchteil an Lumineszenzlicht aufnehmen können, welcher in seinem Raumwinkelelement liegt, das durch die Größe seines sensitiven Bereiches und seinen Abstand zur Kapillare bestimmt ist.

Im Stand sind bereits verschiedene Ansätze bekannt, um den Raumwinkel bei der Fluoreszenzmessung zu vergrößern.

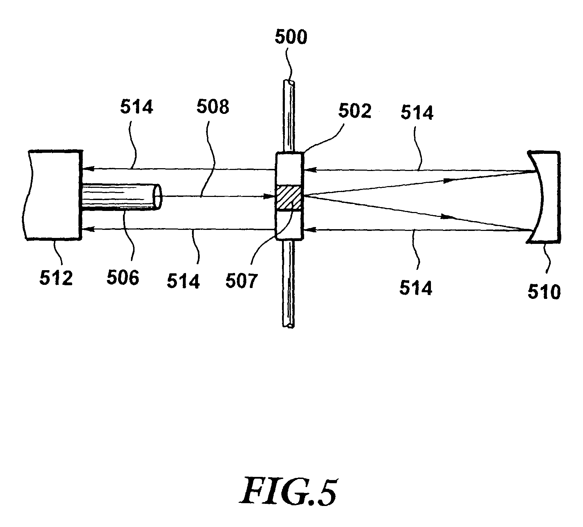

Die US-A-5,484,571 offenbart eine solche Lösung zur Vergrößerung dieses Raumwinkels bei der Fluoreszenzmessung. Diese Lösung ist in Fig. 5 schematisch dargestellt. Eine Kapillare 500 ist in einer Haltevorrichtung 502 aufgenommen. Die Haltevorrichtung ist beispielsweise ringförmig ausgestaltet, wobei in einem mittigen Bereich 504 der Halterung 502 ein Detektionsfenster vorgesehen ist, durch welches die Kapillare mit Licht bestrahlt wird. Mittels einer Lichtquelle 506, wie z. B. einem Laser, wird der im Bereich 504 liegenden Abschnitt der Kapillare 500 mittels eines Lichtstrahlenbündels 508 bestrahlt. Das von der Kapillare im Bereich 504 abgestrahlte Licht, welches in Fig. 5 nicht näher dargestellt ist, wird mittels eines Parabolreflektors 510 gesammelt und auf einen Photodetektor 512 reflektiert, wie dies durch die Pfeile 514 dargestellt ist. Die Halterung 502 ist derart ausgestaltet, daß das von dem Reflektor 510 reflektierte Licht 514 durch diese ungestört hindurchtreten kann.

Einen Nachteil dieser bekannten Anordnung besteht darin, daß im besten Fall lediglich 40 - 50% des in einen Halbraum 2π abgestrahlten, also nur 20 - 25% des gesamten Fluoreszenzlichtes auf den Photodetektor gelangen. Ein weiterer Nachteil sind die relativ hohen Kosten für die Meßanordnung, einschließlich des Paraholreflektors.

Wiederum ein weiterer Nachteil besteht darin, das die Erfassung der von der Kapillare abgegebenen Strahlung es erforderlich macht, optische Gesichtspunkte beim Aufbau dieser bekannten Anordnung zu berücksichtigen, wie beispielsweise die Form bzw. den Krümmungsradius des Parabolreflektors, dessen Abstand von dem Photodetektor, zur Einstellung des Brennpunkts usw., was die Handhabung dieser bekannten Vorrichtung sehr erschwert.

Die EP-A-0404646 offenbart eine Kapillare für die Elektrophorese, welche teilweise mit einer reflektierenden Beschichtung, z. B. durch Bedampfen mit einem Metall, versehen ist. Diese reflektierende Beschichtung lenkt das im Inneren der Kapillare entstehende Licht auf den Photodetektor. Diese Anordnung ermöglicht es im Gegensatz zur US-A-5,484,571 fast das gesamte in den Vollraumwinkel 4π abgestrahlte Fluoreszenzlicht zu erfassen. Der Nachteil dieser Lösung besteht darin, daß die Beschichtung der Kapillare, welche in der Regel ein billiges Wegwerfteil ist, zusätzliche Kosten verursacht, und das die Lage dieser beschichteten Kapillare beim Einbau präzise zum Photodetektor und der ggf. vorhandenen Lichtquelle justiert werden muß.

Ausgehend von diesem Stand der Technik liegt der vorliegenden Erfindung die Aufgabe zugrunde, eine einfach handzuhabende und kostengünstige Vorrichtung zu schaffen, die die Erfassung von abgestrahlten Fluoreszenzlicht im wesentlichen im gesamten Vollraumwinkel von 4π ermöglicht.

Diese Aufgabe wird durch eine Vorrichtung gemäß dem Patentanspruch 1 gelöst.

Die vorliegende Erfindung schafft eine Vorrichtung zur Erfassung von diffus emittiertem Licht, welches aufgrund einer chemischen Reaktion einer reagierenden Substanz oder durch Lichtanregung der reagierenden Substanz erzeugt wird, mit einem Substrat, das in einer seiner Oberflächen eine Vertiefung zur Aufnahme einer Kapillare, in der die reagierende Substanz aufgenommen werden kann, aufweist, wobei in der Vertiefung die Kapillare zumindest teilweise aufgenommen werden kann, wobei die Bewandung der Vertiefung das aus der Kapillare abgegebene Licht reflektiert, und einem Photodetektor, der auf dem Substrat derart angeordnet werden kann, daß er die Vertiefung derart überdeckt, daß das von der Bewandung der Vertiefung reflektierte Licht auf den Photodetektor trifft.

Der Vorteil der vorliegenden Erfindung besteht darin, daß durch die erfindungsgemäße Vorrichtung auf eine sehr einfache und kostengünstige Weise eine Chemilumineszenzmeßzelle realisiert werden kann, mit der nahezu das gesamte, in alle Raumwinkelelemente gestreute Lumineszenzlicht effizient detektiert werden kann, und die den Einsatz herkömmlicher Kapillaren ermöglicht, und bei denen eine Einstellung bzw. Justage beim Austausch der Kapillare nicht nötig ist.

Ein weiterer Vorteil der vorliegenden Erfindung besteht darin, daß eine Fluoreszenzmeßzelle geschaffen wird, die gegenüber der bereits kommerziell erhältlichen Fluoreszenzmeßzelle gemäß der US-A-5,484,571 einen einfachen, kompakten und sehr preisgünstigen Aufbau hat.

Wiederum ein weiterer Vorteil besteht darin, daß das Lumineszenzlicht aus einer fast beliebigen Länge der "leuchtenden" Kapillare aufsummiert wird und direkt dem Detektor zugeführt werden kann, was die Meßempfindlichkeit gegenüber bekannten Meßzellen erheblich erhöht.

Ein weiterer Vorteil der vorliegenden Erfindung besteht darin, daß zusätzliche optische Komponenten, wie Linsen, dichroitische Strahlteiler, optische Austrittsfenster etc., die im Stand der Technik erforderlich sind, vollständig entfallen, was neben der erheblichen Kostenersparnis vor allem auch eine verbesserte Meßempfindlichkeit herbeiführt.

Wiederum ein weiterer Vorteil der vorliegenden Erfindung gegenüber dem aus dem Stand der Technik bekannten Vorrichtungen besteht darin, daß anstelle des im Stand der Technik gelehrten abbildungsoptischen Ansatzes zur Erfassung des abgestrahlten Lichtes die vorliegende Erfindung eine flächige Detektion ermöglicht, bei der die aus der Optik resultierenden Einstellungen, wie beispielsweise des Abstandes des Parabolreflektors von dem Detektor, vollständig entfallen können. Dies führt zu einer ausgesprochen kompakten Bauweise und einer ausgesprochen leichten Handhabung der Meßzelle gemäß der vorliegenden Erfindung.

Bevorzugte Weiterbildungen der vorliegenden Erfindung sind in den Unteransprüchen definiert.

Nachfolgend werden anhand der beiliegenden Zeichnungen bevorzugte Ausführungsbeispiele der vorliegenden Erfindung näher dargestellt.
- Fig. 1A: zeigt eine Draufsichtdarstellung eines ersten Ausführungsbeispiels der vorliegenden Erfindung;
- Fig. 1B: zeigt eine Querschnittdarstellung entlang der Linie B-B aus Fig. 1A;
- Fig. 2: zeigt eine bevorzugte Weiterbildung des Ausführungsbeispiels aus der Fig. 1;
- Fig. 3A und 3B: zeigen ein zweites bevorzugtes Ausführungsbeispiel der vorliegenden Erfindung;
- Fig. 4A: zeigt ein drittes bevorzugtes Ausführungsbeispiel der vorliegenden Erfindung;
- Fig. 4B: zeigt eine Schnittdarstellung entlang der Linie B-B aus Fig. 4A; und
- Fig. 5: zeigt eine aus dem Stand der Technik bekannte Vorrichtung zur Erfassung des von einer Kapillare abgegebenen Lichtes.

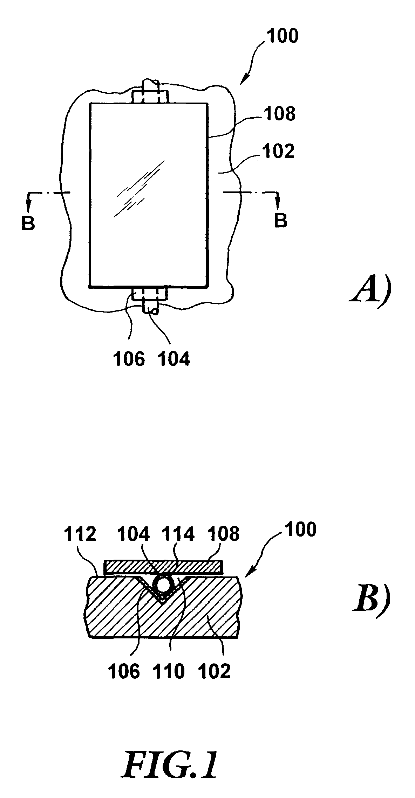

Nachfolgend wird anhand der Fig. 1 ein erstes bevorzugtes Ausführungsbeispiel der vorliegenden Erfindung näher beschrieben.

In Fig. 1A ist eine Meßzelle 100 zur Erfassung von diffus emittiertem Licht dargestellt. Die Meßzelle 100 dient dazu, das aufgrund einer chemischen Reaktion einer reagierenden Substanz erzeugte Licht, welches von einer Kapillare abgegeben wird, zu erfassen.

Die Meßzelle 100 bzw. die Vorrichtung zur Erfassung des diffus emittierten Lichtes umfaßt ein Substrat 102, in dem eine Kapillare 104 aufgenommen ist, wie es nachfolgend anhand der Fig. 1B noch näher erläutert wird. Zwischen der Kapillare und dem Substrat 102 ist eine Schicht 106 angeordnet, die das von der Kapillare abgegebene Licht reflektiert. Ein Photodetektor 108 ist auf dem Substrat 102 derart angeordnet, daß er die Kapillare 104 überdeckt, wobei mittels der reflektierenden Schicht 106 das von der Kapillare 104 abgegebene Licht, welches nicht in Richtung des Photodetektors abgegeben wurde, zu diesem hin reflektiert wird.

In Fig. 1B ist eine Querschnittsdarstellung der Meßzelle 100 entlang der Linie B-B in Fig. 1A dargestellt. Wie in Fig. 1B zu sehen ist, weist das Substrat 102 eine Vertiefung 110 auf, die in einer Oberfläche 112 des Substrats 102 gebildet ist. In der Vertiefung 110 kann die Kapillare zur Erfassung des von dieser abgestrahlten Lichtes aufgenommen werden. Die reflektierende Schicht 106 ist auf den Bewandungen der Ausnehmung bzw. Vertiefung 110 gebildet und reflektiert das von der Kapillare 104 in Richtung der Bewandung 106 abgegebene Licht auf den Photodetektor 108. Die Kapillare bzw. Kapillarküvette 104 umfaßt eine chemisch aktive Innenbeschichtung 114, welche bei einer chemischen Reaktion mit einer in der Kapillare vorhandenen oder in diese eingebrachten reagierenden Substanz Licht erzeugt, welches durch den Photodetektor 108 erfaßt wird.

Gemäß dem in der Fig. 1 dargestellten bevorzugten Ausführungsbeispiel liegt die Kapillare 104 in der Vertiefung 110, die als V-förmige Nut (im folgenden V-Nut) in dem Substrat 102 gebildet ist. Diese V-Nut ist mit der hochreflektierenden Spiegelschicht 106 versehen, die beispielsweise durch Aufdampfen eines hochreflektierenden Metalls, wie z. B. Gold oder Aluminium, hergestellt wird. Das durch die chemische Reaktion erzeugte Lumineszenzlicht gelangt teilweise direkt auf den unmittelbar darüberliegenden, großflächigen Photodetektor 108, bzw. wird von der Spiegelschicht 106 reflektiert und gelangt dann auf den Photodetektor 108. Auf diese Weise gelangt über die Länge der Kapillare 104, die vom Photodetektor 108 überdeckt ist, annähernd 100% der entstehenden Chemilumineszenzstrahlung auf den Photodetektor 108. Die Breite des Photodetektors soolte mindestens gleich der Breite der Vertiefung sein, damit 100 % der emittierten Strahlung auf den Photodetektor gelangt.

Das Substrat, welches die V-Nut 110 umfaßt, kann beispielsweise aus Silizium hergestellt sein, in dem die V-Nut 110 durch anisotropes Ätzen sehr präzise hergestellt werden kann. Das Substrat kann aber auch ein Kunststoffteil oder ein Metall, wie z. B. Aluminium sein, in das die V-Nut 110 durch Fräsen oder Kalteinsenken eines Prägestempels sehr kostengünstig sowie mit hoher Präzision und Oberflächengüte eingebracht wird, so daß in diesem Fall auf eine zusätzliche Spiegelschicht verzichtet werden kann.

Das Aufbringen der Spiegelschicht kann beispielsweise durch Sputtern, Aufdampfen oder das Aufbringen von Metallfolien geschehen. Wie es bereits oben ausgeführt wurde, ist es nicht zwingend erforderlich, in jedem Fall eine reflektierende Schicht 106 zu versehen. Im Fall eines Aluminiumblocks, in dem die V-Nut 110 vorgesehen ist, ist es beispielsweise ausreichend, die Oberfläche der Bewandung 110 ausreichend zu polieren, um die erwünschten Reflexionen herbeizuführen.

Es wird darauf hingewiesen, daß das anhand der Fig. 1 beschriebene bevorzugte Ausführungsbeispiel nicht auf die dort beschriebene V-Nut 110 beschränkt ist, vielmehr sind auch andere Ausgestaltungen der Vertiefung 110 in dem Substrat 102 möglich, wie beispielsweise eine halbrunde Vertiefung. Soweit die Bewandung der Vertiefung 110 dazu geeignet ist, daß von der Kapillare ausgegebene Licht in Richtung des Photodetektors 108 zu reflektieren, kommt es auf die spezielle Ausgestaltung der Vertiefung 110 selbst nicht an.

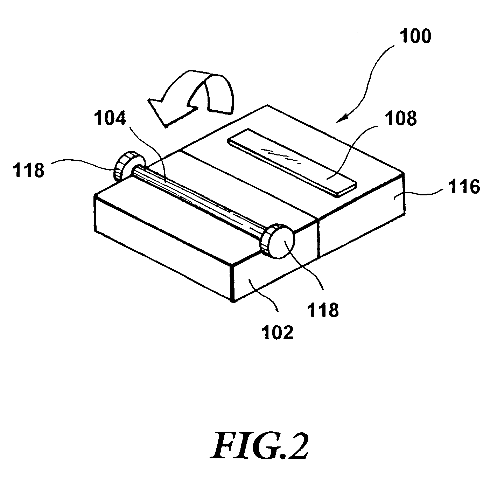

Anhand der Fig. 2 wird nachfolgend eine bevorzugte Weiterbildung des Ausführungsbeispiels, das anhand der Fig. 1 beschrieben wurde, näher dargestellt.

In Fig. 2 ist die Meßzelle 100 dargestellt, die das Substrat 102, die in der Vertiefung aufgenommene Kapillare 104 sowie den Photodetektor 108 umfaßt. Wie es in Fig. 2 zu sehen ist, ist der Photodetektor 108 in einem weiteren Substrat 116 angeordnet, welches mit dem Substrat 102 derart verbunden ist, daß der Photodetektor 108 von einer ersten Stellung, wie sie in Fig. 2 dargestellt ist, die die Entnahme oder das Einbringen der Kapillare 104 ermöglicht, in eine zweite Stellung zur Erfassung des Lichts bewegt werden kann. Bei der in Fig. 2 dargestellten klappbaren Ausführungsform der erfindungsgemäßen Meßzelle 100 kann die Kapillare 104 sehr leicht ausgetauscht werden, und durch Zuklappen des Deckels 116, in dem der Photodetektor 108 angeordnet ist, kann die Kapillare 104 ohne weitere Maßnahmen in ihrer Position fixiert werden. Die fluidmäßige Verbindung der Kapillare 104 und die Lichtabdichtung im zugeklappten Zustand erfolgt über übliche Fluidkopplungen 118.

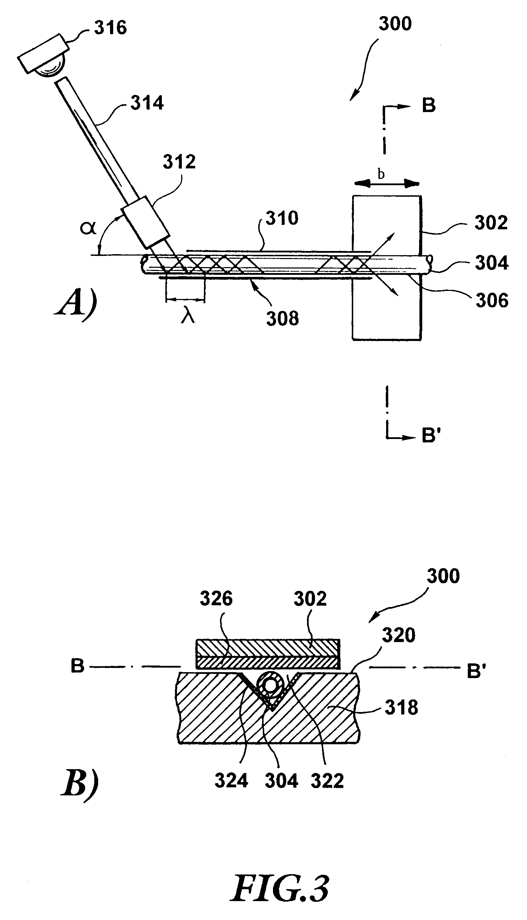

Nachfolgend wird anhand der Fig. 3 ein weiteres Ausführungsbeispiel der vorliegenden Erfindung näher dargestellt. Das Ausführungsbeispiel gemäß der Fig. 3 betrifft eine Meßzelle, welche in ihrer Gesamtheit mit dem Bezugszeichen 300 versehen ist. Die Meßzelle 300 erfaßt Fluoreszenzlicht, welches durch Anregung einer reagierenden Substanz in einer Kapillare erzeugt wurde. Wie es in Fig. 3A dargestellt ist, umfaßt die Meßzelle 300 einen Großflächenphotodetektor 302, der in Fig. 3A lediglich schematisch dargestellt ist. Ferner ist eine Kapillare 304 vorgesehen, die einen ersten Abschnitt 306 und einen zweiten Abschnitt 308 umfaßt. Der zweite Abschnitt 308 der Kapillare 304 ist mit einer Spiegelschicht 310 umgeben, und der erste Abschnitt 306 der Kapillare 304 ist unbeschichtet. An dem dem ersten Abschnitt abgewandten Ende des zweiten Abschnittes 310 ist über eine Linse 312 und eine Glasfaser 314 Licht von einer Lichtquelle 316 in die Kapillare 104 einkoppelbar. Das in die Kapillare bzw. Kapillarküvette 304 eingebrachte Licht wird in dem Abschnitt 308, der die Spiegelschicht 310 aufweist, mehrfach reflektiert und tritt im ersten Abschnitt 306 der Kapillare 304 aus und trifft z.T nach Reflexion an der Bewandung 304 auf den Photodetektor 302. Das der Meßzelle 300 zugrundeliegende Funktionsprinzip wird nachfolgend näher erläutert. Das Licht wird durch die Glasfaser 314, ggf. über Gradientenstablinse 312 oder eine andere Mikrolinse kollimiert und in die Kapillare 304, welche beispielsweise eine Fused Silica Kapillare ist, eingekoppelt. Durch die äußere Verspiegelung 310 des zweiten Abschnitts der Kapillare 304 wirkt dieser als eine Art Wellenleiter, und das eingekoppelte Licht wird somit durch Mehrfachreflexionen an der verspiegelten Wand 310 des zweiten Abschnitts 308 der Kapillare 304 geführt. Durch diese Vielfachreflexionen wird trotz der kompakten Bauweise ein relativ langer optischer Weg in der Kapillare 304 erreicht, d. h. es wird dadurch eine Vergrößerung der optischen Absorptionslänge erreicht, was für den Einsatz einer solchen Anordnung als Transmissionszelle sehr von Vorteil ist. Im ersten, unverspiegelten Abschnitt 306 der Kapillare 304 tritt das Licht über einer Länge, die ungefähr der Periode \ der Hin- und Her-Reflexionen entspricht, in einem Raumwinkelbereich fast vollständig aus. Die Größe dieses Raumwinkels hängt ab von dem Winkel α der Achse der Glasfaser 314 bzw. der Mikrolinse 312 zu der Kapillare 304, von dem Divergenzwinkel des aus der Glasfaser 314 bzw. der Mikrolinse 312 austretenden Lichtes und von der Kapillarlänge ab. In Fig. 3B ist der Bereich, in dem der erste Abschnitt 306 der Kapillare 304 liegt, näher dargestellt. Wie es bereits anhand der Fig. 1 beschrieben wurde, umfaßt auch dieser Abschnitt der Meßzelle 300 ein Substrat 318, das eine Oberfläche 320 umfaßt, in der eine Vertiefung 322 gebildet ist, deren Bewandungen das von der Kapillare 304 abgegebene Licht reflektieren. Die Bewandung 324 der Vertiefung 322 kann ebenso wie bei dem anhand der Fig. 1 beschriebene Ausführungsbeispiel entweder durch eine Spiegelschicht oder durch eine Oberfläche mit hoher Oberflächengüte gebildet sein. Der erste und der zweite Abschnitt 306, 304 sind entweder einstückig ausgeführt oder durch eine Verbindereinrichtung miteiander lösbar verbunden.

Das aus dem zweiten Abschnitt 308 der Kapillare 304 austretende Licht (siehe die Pfeile in Fig. 3A) gelang mit der anhand 3B beschriebenen Anordnung aus Photodetektor 302 und Reflektor 324 praktisch vollständig in den Photodetektor 302, wobei dessen Breite b größer als die Periodenlänge \ ist.

Nützt man die anhand der Fig. 3 dargestellte Meßanordnung als Fluoreszenzmeßzelle, so kann vor dem großflächigen Photodetektor 302 ein Interferenzfilter 326 vorgeschaltet werden, damit möglichst weinig Anregungslicht auf den Photodetektor gelangt. Auch in diesem Fall kann man sich die lange optische Weglänge zunutze machen, um möglichst viele Moleküle in der Kapillare zur Fluoreszenz anzuregen bzw. zu detektieren. Dadurch läßt sich gegenüber aus dem Stand der Technik bekannten Anordnungen die Meßempfindlichkeit verbessern, bzw. die erforderliche Leistung des Anregungslichtes kann geringer sein. Dies ermöglicht z. B. den Einsatz leistungsschwächerer und damit kostengünstigerer Laser als Lichtquelle 316.

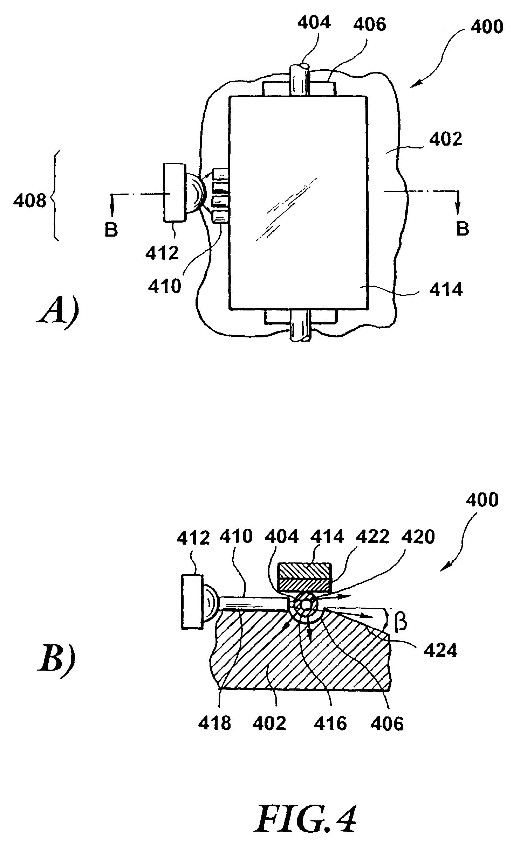

Anhand der Fig. 4 wird nachfolgend ein drittes bevorzugtes Ausführungsbeispiel der vorliegenden Erfindung näher beschrieben. In Fig. 4 ist eine Meßzelle 400 dargestellt, die zur Erfassung von Fluoreszenzlicht dient. Der Aufbau der Meßzelle 400 ist über weite Strecken dem Aufbau der Meßzelle 100, die anhand der Fig. 1 beschrieben wurde, identisch. Die Meßzelle 400 umfaßt ein Substrat 402, eine Kapillare 404, sowie eine zwischen dem Substrat 402 und der Kapillare 404 angeordnete reflektierende Schicht 406. Die genaue Anordnung des Substrats, der Kapillare und der reflektierenden Schicht wird nachfolgend anhand der Fig. 4B näher erläutert. In einem Abschnitt 408 der Meßzelle 400 sind eine oder mehrere Glasfasern 410 angeordnet, welche Licht von einer Lichtquelle 412 in Richtung der Kapillare 404 leiten. Ein großflächiger Photodetektor 414 ist oberhalb der Kapillare 404 angeordnet.

In Fig. 4B ist eine Schnittdarstellung entlang der Linie B-B aus Fig. 4A dargestellt. Wie es in Fig. 4B zu erkennen ist, ist die Kapillare 404 in einer Vertiefung 416, die in einer ersten Oberfläche 418 des Substrats 402 gebildet ist, angeordnet. Die Kapillare 404 ist auf ihrer Innenseite mit einer chemisch aktiven Schicht 420 beschichtet. Die reflektierende Schicht 406 ist auf der Bewandung der Vertiefung 416 angeordnet und entweder durch eine entsprechende Oberflächenbehandlung der Bewandung herbeigeführt oder durch eine Spiegelschicht gebildet. Hinsichtlich einer näheren Erläuterung der reflektierenden Bewandung wird auf die Ausführungen zur Fig. 1 verwiesen.

Zwischen dem Photodetektor und der Kapillare 404 ist ein Interferenzfilter 422 angeordnet, um die Bestrahlung des Photodetektors mit Anregungslicht zu verhindern. Um eine Reflexion des Anregungslichtes zum Photodetektor hin zu vermeiden, ist ein Abschnitt 424 des Substrats 402, der dem Bereich gegenüber liegt, an dem der Vertiefung das Licht zugeführt wird, derart ausgestaltet, daß keinerlei Reflexionen auftreten.

Bei dem in Fig. 4B dargestellten Ausführungsbeispiel ist der Abschnitt 424 unter einem Winkel β gegenüber der Substratoberfläche abgeschrägt, wobei der Winkel β derart ausgewählt ist, daß dieser größer ist als der maximale Winkel, den das aus der Kapillare 420 austretende Licht zur Oberfläche 418 des Substrats 402 bildet.

Bei der in Fig. 4 dargestellten Fluoreszenzlichtmeßanordnung wird in einem Winkel von dem ungefähr 90° zur Kapillare 404 Licht mittels der Lichtquelle 412, wie beispielsweise einer LED oder eines Lasers, eingestrahlt, und soweit erforderlich, über eine oder mehrere dazwischengeschaltete Lichtzuführungseinrichtungen, die in Fig. als Glasfasern 410 ausgebildet sind, eingestrahlt, um die Probe innerhalb der Ka pillare 404 zur Fluoreszenz anzuregen. Gemäß dem in Fig. 4 dargestellten Ausführungsbeispiel ist die Kapillare in einer V-Nut angeordnet. Das Interferenzfilter 422, welches vor dem Photodetektor 414 vorgesehen ist, ist eine dielektrisches Interferenzfilter des Typs Long Wave Pass oder Band Pass, welches verhindert, daß das Anregungslicht auf den Photodetektor 114 gelangt. Um das direkt, durch Streuung oder durch Reflexion auf den Photodetektor gelangende Anregungslicht möglichst gering zu halten, müssen der Photodetektor 114 und das Substrat 402 außerhalb des Abstrahlwinkels der Glasfaser 410 liegen. Dies geschieht durch die Abschrägung 424 des Substrats und eine entsprechende Anordnung des Photodetektors 414.

Die obigen bevorzugten Ausführungsbeispiele schaffen eine Vorrichtung zur Erfassung von diffus emittiertem Licht, die eine kompakte Anordnung ist, die absolut unempfindlich gegen äußere mechanische Schwingungen und Streulicht von außen ist. Sie ist daher auch sehr gut für tragbare Geräte und rauhe Umgebungsbedingungen geeignet. Ein Wechsel der Kapillare läßt sich in sehr kurzer Zeit bewerkstelligen. Die Fluidkopplungen von der Kapillare in der Meßzelle mit einer äußeren Fluidik dienen gleichzeitig als lichtdichte Abschlüsse nach außen. Die Fluidzuführungen zur Detektionsmeßzelle müssen dabei über lichtdichte Schläuche bzw. über Stahlkapillaren aus der HPLC-Technik (HPLC = High Pressure Liquid Chromatographie = Hochdruckflüssigkeischromatographie) ausgeführt werden, um ein Einschleppen von Streulicht in die Lumineszenzzelle zu vermeiden. Eine zusätzliche Verbesserung der Meßempfindlichkeit und Unempfindlichkeit gegenüber Fremdlicht bei der Fluoreszenzanordnung, die anhand der Fig. 4 beschrieben wurde, kann durch eine Intensitätsmodulation der Anregungslichtquelle und eine phasensynchrone Gleichrichtung des Photostroms erreicht werden. Die Modulation der Lichtquelle erfolgt hierbei entweder durch eine Strommodulation oder mit Hilfe von Lichtzerhackern.

Wie es bereits oben ausgeführt wurde, besteht ein Vorteil der erfindungsgemäßen Meßzellen darin, daß sie eine sehr einfache, kompakte und sehr preisgünstige Anordnung schaffen, bei der das Lumineszenzlicht aus einer fast beliebigen Länge der leuchtenden Kapillare aufsummiert und direkt dem Photodetektor zugeführt werden kann, was die Meßempfindlichkeit gegenüber bekannten Meßzellen erhöht. Einziger begrenzender Faktor ist die Länge der eingesetzten Streifen-Photodiode.

## Patentansprüche

1. Vorrichtung (100; 300; 400) zur Erfassung von diffus emittiertem Licht, welches aufgrund einer chemischen Reaktion einer reagierenden Substanz oder durch Lichtanregung der reagierenden Substanz erzeugt wird, gekennzeichnet durch
ein Substrat (102; 308; 402), das in einer seiner Oberflächen (112; 320; 418) eine Vertiefung (110; 322; 416) zur zumindest teilweisen Aufnahme einer Kapillare (104; 304; 404), in der die reagierende Substanz aufgenommen werden kann, aufweist, wobei die Bewandung (106; 324; 406) der Vertiefung das aus der Kapillare abgegebene Licht reflektiert; und
einen Photodetektor (108; 302; 414), der auf dem Substrat (102; 318; 402) derart angeordnet werden kann, daß er die Vertiefung derart überdeckt, daß das von der Bewandung der Vertiefung reflektierte Licht auf den Photodetektor trifft.

2. Vorrichtung (100; 300; 400) nach Anspruch 1, dadurch gekennzeichnet,
daß die Vertiefung (110; 322; 416) derart ausgebildet ist, daß die Kapillare vollständig in dieser aufgenommen werden kann.

3. Vorrichtung (100) nach Anspruch 1 oder 2, dadurch gekennzeichnet,
daß der Photodetektor (108) mit dem Substrat (102) derart verbunden ist, daß er von einer ersten Stellung, die die Entnahme oder das Einbringen der Kapillare (104) in die Vertiefung 110 ermöglicht, in eine zweite Stellung zur Erfassung des Lichtes bewegt werden kann.

4. Vorrichtung (300) nach Anspruch 1 oder 3, dadurch gekennzeichnet,
daß die Kapillare (304) einen ersten, unbeschichteten Abschnitt (306) und einen zweiten, mit einer reflektierenden Schicht (310) versehenen Abschnitt (308) aufweist, wobei der erste und der zweite Abschnitt (306, 304) einstückig oder durch eine Verbindereinrichtung verbindbar gebildet sind;
daß der erste Abschnitt (306) der Kapillare (304) in der Vertiefung (322) des Substrats aufgenommen ist; und
daß an dem dem ersten Abschnitt (306) der Kapillare (304) abgewandten Ende des zweiten Abschnitts (208) Licht in die Kapillare einkoppelbar ist.

5. Vorrichtung (400) nach einem der Ansprüche 1 bis 3, gekennzeichnet durch
eine Lichtzuführeinrichtung (410), mittels der Licht zur Anregung der reagierenden Substanz zu einem Abschnitt (408) der Vertiefung (416) zuführbar ist,
wobei ein Bereich des Substrats (402), der dem Abschnitt der Vertiefung, zu dem das Licht zuführbar ist, gegenüberliegt, derart ausgebildet ist, daß das Anregungslicht nicht reflektiert und nicht gestreut wird.

6. Vorrichtung (400) nach Anspruch 5, dadurch gekennzeichnet,
daß die Lichtzuführeinrichtung (410) das Anregungslicht im wesentlichen senkrecht zu der Vertiefung zuführt.

7. Vorrichtung (400) nach Anspruch 5 oder 6, dadurch gekennzeichnet,
daß der Bereich (424) des Substrats (402), der dem Abschnitt der Vertiefung, zu dem das Licht zuführbar ist, gegenüberliegt, und einem Winkel (β) gegenüber der Oberfläche (418) des Substrats (402) abgeschrägt ist, wobei der Winkel (β) größer ist, als der maximale Winkel, den das von der Lichtzuführungseinrichtung (410) abgegebene Licht und aus der Kapillare austretende Licht mit der Oberfläche (418) des Substrats (402) bildet.
